# EUROPEAN PATENT SPECIFICATION

(11) **EP 0 980 644 B1**
(45) Date of publication and mention of the grant of the patent: **28.01.2004**
(21) Application number: 99202695.5
(22) Date of filing: 19.08.1999
(51) Int. Cl.: A01D 33/06, A01D 25/04

(54) **Haulm puller and method for pulling haulm**
Krautrupfer und Verfahren um Kraut zu ziehen
Méthode et appareil pour arracher des fanes

(30) Priority: 19.08.1998 NL 1009902
(43) Date of publication of application: 23.02.2000
(73) Proprietor: Bouman, Aries, 6703 GR Wageningen (NL)
(72) Inventor: Bouman, Aries, 6703 GR Wageningen (NL)
(74) Representative: Prins, Adrianus Willem

(56) References cited:
- DE-A- 3 238 056
- FR-A- 1 132 644
- FR-A- 2 033 592
- FR-A- 2 063 924

## Description

The invention relates to a haulm puller according to the preamble of claim 1. The invention also relates to a method for pulling haulm according to the preamble of claim 5. Such a haulm puller and such a method are known from French patent application 2 033 592.

In potato growing the haulm is removed from the potatoes or destroyed before lifting so as to facilitate lifting and further treatment. In the case of the growing of seed potatoes the removal of the haulm additionally serves to prevent infection of the potatoes via the haulm and to stop the growth of the potatoes.

Known methods for removing the haulm are spray killing, haulm burning, green lifting and covering up, and haulm pulling. Spray killing is done by spraying the haulm full-fieldwise with poison, green burning is also done full-fieldwise by burning the haulm. Green lifting and covering up are done mechanically by lifting the potatoes and covering up again with earth. Green lifting is done by engaging and pulling loose the haulm.

Although effective, the methods of spray killing and haulm burning are rather harmful to the environment. Green lifting is laborious and hard to perform and is not applicable to all types of earth. Haulm pulling is essentially harmless to the environment, offers the advantage of a controlled inhibition of the growth of the tubers and involves a much lower infection of the tubers with black scurf (*Rhizoctonia solani*). Yet haulm pulling, known for a very long time, is still hardly practiced.

A reason for this is that haulm pulling proceeds slowly with the known haulm pullers and a satisfactory result is very hard to obtain. Sometimes too much haulm is left on the tubers, so that after pulling the haulm can start growing again and the tubers can still be infected, and sometimes the tubers can come to the surface, so that they can be damaged and turn green.

It is an object of the invention to provide a haulm puller with which better results can be obtained, and which, moreover, is easier to operate.

To this end, a haulm puller is proposed according to the invention, which is arranged in accordance with the characterizing part of claim 1, and a method for pulling haulm is carried out in accordance with the characterizing part of claim 6.

By automatically adapting the engagement height of the haulm pulling assembly, during operation, to the height of the ground in the area of the row of plants from which the haulm must be pulled, it is achieved that little or no haulm is left, and that no or substantially no tubers come to the surface. Because of the automatic adjustment of the height even an inexperienced operator can achieve these desired results. Furthermore, the rate of driving over the field can be increased, because the height at which the haulm pulling assembly engages the plants is automatically adjusted.

In the area of the rows of plants from which the haulm must be pulled, the ground (this may be the upper side of a ridge or a part of a full bed containing the plants) is densely occupied with plants. This renders it difficult to determine the height of the ground. By mechanically sensing at a suitable pressure and with a suitably formed sensing member, however, it proves possible in a very simple manner to obtain an accurate indication of the height of the ground in the area of the rows of plants from which the haulm must be pulled, such that when pulling haulm substantially better results are obtained than when pulling haulm at a fixed or manually operated adjustment of the engagement height.

On the one hand, the sensor slightly presses the plants aside in the area in which the height of the ground has to be determined so that the plants do not disturb the measuring result. On the other hand, the plants make the ground firm in the area over which the sensor runs, such that the sensor is not pressed into the often soft ground. Depending on the type of plants and the ground condition, the sensor can then run over the ground or over stems of the plants lying on the ground, in which latter case the stems over which the sensor runs ensure an extra pressure distribution without essentially disturbing the measuring result. If desired, the measuring result or the height adjustment can be corrected for the running of the sensor over the stems.

The sensor thus runs between the plants of a row and presses the stems of the plants slightly aside when located in the path of the sensor and receives support from the ground made firm through the presence of the plants exactly in the area of the row. This ensures, in a very simple manner, the desired selectivity in the observance between plants, to be left out of account, and the ground, the level of which is to be determined.

Because, furthermore, the height of the haulm pullers above the ground in the area of the rows of haulm to be pulled is better controlled, the plants can be more properly raised and passed to the haulm pulling assembly, so that especially flat-lying stems can be pulled more reliably.

In the dependent claims very advantageous embodiments and methods of the invention are described.

The above and other objects of the invention as well as measures for realizing these objects will be explained by means of the following description of an example of a device according to the invention. Reference is made to the drawing in which:
Fig. 1 is a diagrammatic side view of a haulm puller according to the invention,
Fig. 2 is a diagrammatic top view of a haulm puller,
Fig. 3 is a diagrammatic longitudinal section of a ridge with potato plants therein, and
Fig. 4 is a diagrammatic cross-section of some parallel ridges.

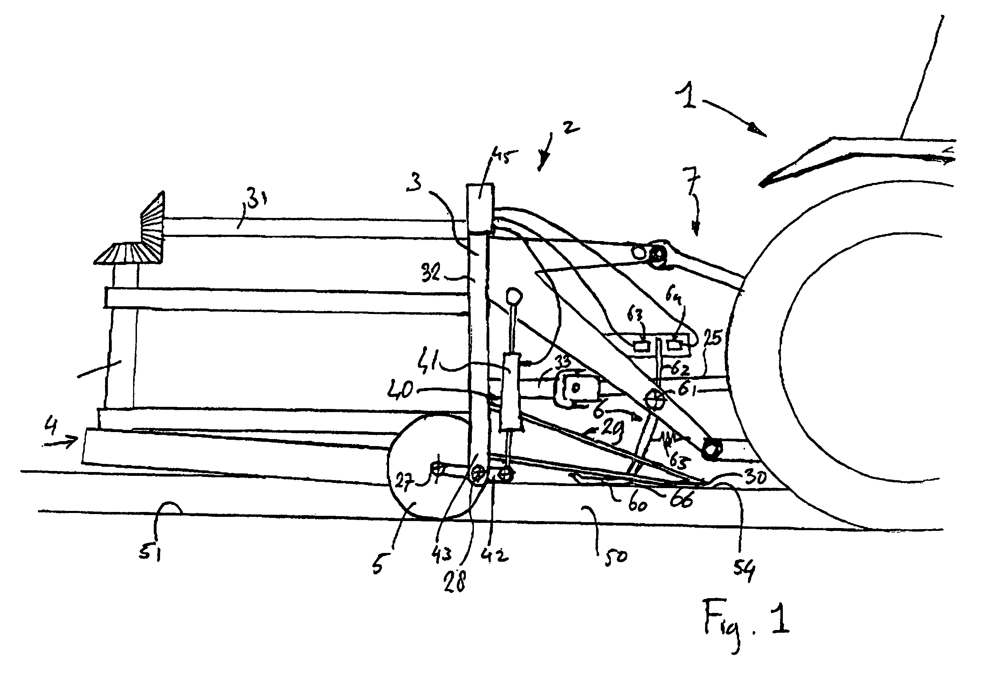

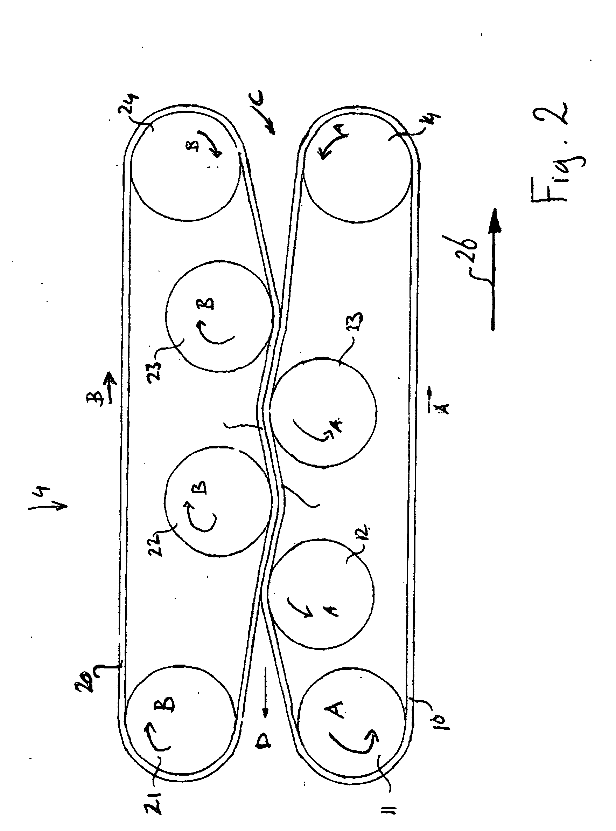

The haulm puller 2 shown in Figs. 1 and 2 is suspended from a three-point suspension 7 of an agricultural tractor 1. The haulm puller 2 has a supporting structure 3 which is supported by an adjustable support wheel 5 and a coupling 7 of the tractor 1. The supporting structure 3 is further provided with a haulm pulling assembly 4 and a level sensor 6. During operation, the tractor 1 draws the haulm puller 2 over the field and drives the haulm pulling assembly 4 by means of a power take-off shaft 25.

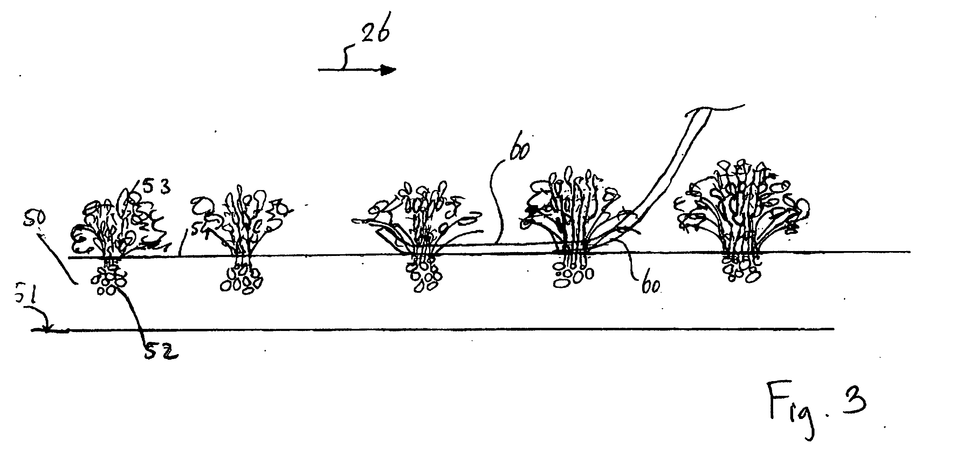

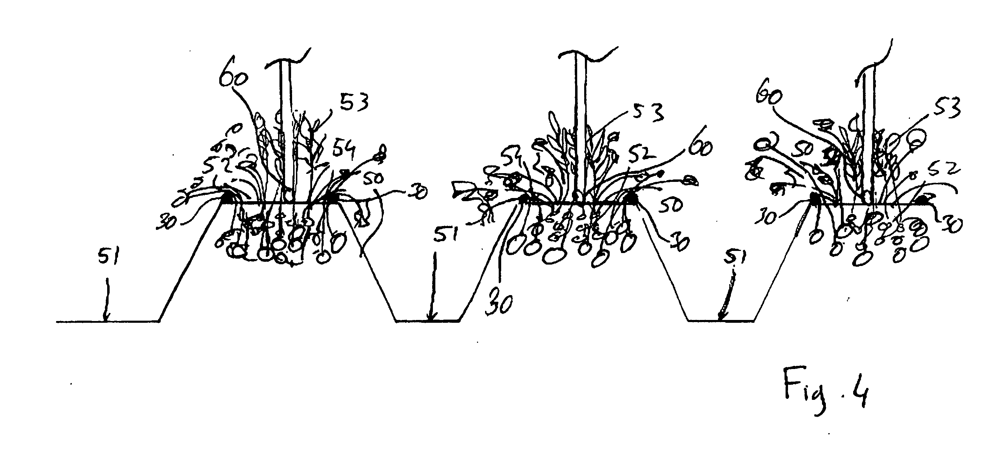

The haulm pulling assembly 4 is of a known per se type (see Dutch patent application 9301688) and is most clearly visible in the diagrammatic top view of Fig. 2. In operation, the haulm pulling assembly 4 engages, pulls loose and discharges the haulm to be removed, while the tractor 1 and the haulm puller 2 move over the field in the direction of travel indicated by an arrow 26 parallel to the rows of plants 53 (see Figs. 3 and 4) from which the haulm is removed. Although the rows of plants can be located in a full bed, it is more usual to grow the potatoes in ridges. The example described herein will further start from the growing of potatoes in ridges.

More in particular, the haulm pulling assembly is provided with two side-by-side, circulating pulling belts 10, 20, which are each tensioned by a driving wheel 11, 21 and three guide wheels 12, 13, 14, 22, 23, 24 rotatably mounted on the subframe 2. The driving wheels 11, 21 have the same diameter, like the guide wheels 12 and 22, 13 and 23, 14 and 24, corresponding to each other. The belts 10, 20 are partially in contact with each other. The driving wheels 11, 21 are driven by means of a drive. In Fig. 1, a part of this drive is visible, comprising a drive shaft 8 for driving a driving wheel 11 (see Fig. 2), which is driven by a driving shaft 31 by means of a suitable gear transmission. This driving shaft 31 is coupled by means of a gearbox 32 with a driving shaft 33 driven by the shaft 25 of the tractor 1. The driving wheel 21 is driven in a corresponding manner.

In operation, the driving wheels 11 and 21 rotate at the same angular speed in opposite directions, like the other wheels and thus the belts 10, 20 as indicated by the arrows A and B in Fig. 2. Consequently, the belts 10, 20 move together in the contact part according to a zigzag line against the direction of travel. Because the guide wheels 14 and 24 are placed at some distance from each other, the belts diverge and form an inlet zone C. In operation, the haulm pulling assembly 4 is moved in the direction indicated by the arrow 26 at a speed lower than the speed of circulation of the pulling belts 10, 20, so that haulm located in the inlet zone C is engaged by the belts and is further conveyed to the outlet zone D. During this conveyance, the haulm is pulled loose from the ground and from the tubers, separated from the tubers and discharged backwards.

As shown in Fig. 1, the haulm pulling assembly 4 is slightly inclined at an angle to a ridge 50 to be treated. This defines, inter alia, the point of engagement of the haulm pulling assembly 4 relative to an upper surface 54 and promotes the pulling loose and discharge of the haulm.

The height of the point of engagement can be changed by means of the height adjustment 40. According to this example, this height adjustment is composed of a hydraulic cylinder 41, one end of which is connected with the supporting structure 3, and the other end of which is connected with an end of a lever 42. The other end of this lever 42 carries the axle 27 of the support wheel 5. Between the axle 27 and the place where the cylinder 41 is coupled to the lever 42 the lever is connected with an upright 43 of the supporting structure 3 so as to be pivotable on a shaft 28. The cylinder 41 is connected with a hydraulic control system 45, which can move the cylinder 41 by means of hydraulic pressure. By moving the cylinder the lever 42 is tilted, so that the height of the supporting structure 3 changes with respect to the support wheel 5 and therefore with respect to the ground on which the wheel 5 stands. Accordingly, the height at which the haulm pulling assembly 4 engages haulm to be pulled can be changed.

Furthermore, a level sensor 6 is provided on the supporting structure 3. The level sensor 6 is equipped with a sensing part 60 intended to sense the level of the upper side of a ridge 50 containing tubers, or at least the course of the ground level in the area of a row of plants. The sensing part 60 is pivot-mounted on the supporting structure 3 by means of a pivot 61 and continues in a detection part 62. When the height detected by the sensing part 60 varies, the sensing part 60 pivots on the pivot 61. This also causes the detection part 62 to swing. The detection part 62 is surrounded by a detection device for converting the movement of the detection part 62 into a control signal. In this example the detection device is equipped with two switches 63 and 64 provided on both sides of the detection part 62. The switches 63 and 64 are connected with the control system 45. When a level change signalized by the sensing part 60 causes the detection part 62 to swing and touch one of the switches 63 and 64, the control system 45 receives a corresponding control signal, in reaction to which this control system adapts the engagement height of the haulm pulling assembly 4 relative to the detected ground level by means of the operation of the cylinder 41 so as to bring this engagement height within a desired reach again. The sensitivity of the detection device can be adapted to adjust the accuracy of the adaptation to the detected ground level and to adjust the location of the desired height reach. In this example this can be achieved by displacing the switches 63, 64 with respect to the detection part 62.

In this example the sensing part 60 is designed as a round slim bar which is bent such that a substantially flat part thereof contacts the ground as a runner of a sledge and the bar merges into a part extending upwards to the pivot 61. A leading part of the sensing part 60 which ascends forms a lead-in part 66. Through the roundness and the relatively small diameter of the bar the lead-in part 66 can be moved along upright crop without breaking the crop or being lifted by the crop. Consequently, the determination of the level of the upper side of the ridge is not essentially disturbed by the presence of plants. Although a round bar is a very simple and cost-effective embodiment of the invention, other suitable embodiments and designs of the sensing part are conceivable as well.

Furthermore, a pulling spring 65 exerting a pulling force on the sensing part 60 is arranged between the sensing part 60 and the supporting structure 3. As a result thereof, the sensing part 60 is forcefully pressed by the spring 65 to the ground to be sensed. This ensures that the sensor is pressed towards the ground forcefully enough to prevent lifting by the plants but, even so, has a small mass, thus enabling the sensor to rapidly follow these height variations of the ridge. Thus an accurate, quickly reacting measurement can be obtained. The spring pressure is adjustable.

Fig. 4 shows a diagrammatic cross-section of a part of a field with parallel ridges 50. The ridges 50 have upper sides 54, and each ridge adjoins a furrow 51. In these furrows the wheels of agricultural machinery can run, so as not to damage the ridges 50. The height of the ridges 50 may be different, depending on the soil type, the method of building up ridges, erosion and the type of grown potatoes.

The potatoes 52 are present in the ridges 50 and bear haulm 53 which rises from the upper side 54 of the ridge 50. The potatoes are in a position favorable to the growth, preferably high in the ridge 50, close to the upper surface 54, in general at a depth of ca. 2-5 cm below the upper side 54. In a ridge 50, as shown in the longitudinal section of Fig. 4, several plants 53 are arranged at a mutual distance from each other. The mutual distance between the plants 53 is preferably always equal and is about 18-33 cm, depending on the type of crop.

In operation, the wheels of the tractor 1 and the support wheels 5 run through tracks 51 between the ridges 50. The haulm pulling assembly is then positioned above the upper surface 54 of a relevant ridge.

The sensing part 60 is in substantially flat contact with the upper side 54 over such a length as to be always supported simultaneously in the area of two successive plants on the ground or at least on stems of the plants lying on the ground. A length suitable therefor is more than 15 cm and preferably 26-35 cm. The haulm projecting from the ground causes the soil around this haulm to always have more firmness than the soil in areas situated centrally between two successive crops. Making the sensing part so long as to be always supported at least by a firm soil part prevents disturbance of the sensing of the ground owing to the sensor 60 sinking into the ground. Moreover, the fact is that substantially the levels of the pieces of ground made firm by the haulm are important to the height adjustment, because exactly the level of these parts of the ground determines on which level the haulm pulling assembly 4 must engage the haulm to be pulled, so as to engage this haulm as low as possible, but without taking soil therewith.

During haulm pulling with the above device the engagement height of the haulm pulling assembly 4 is always accurately adapted to the level of the upper surface 54 on the basis of the height sensed by the sensing device. The engagement height is thus adapted to deviations arisen from irregularities in the ridges and/or the tracks. Surprisingly, the haulm is removed very effectively and reliably if the haulm is always engaged within a small zone close around the ground level. Outside this zone too low engagement proves to involve damage to the ridges and the potatoes. Too high engagement, however, breaks the haulm, so that it is not removed completely. It proves to be particularly favorable if the engagement height is kept within a range of -1 to +1 cm with respect to the level of the upper sides of the ridges.

The device according to the example shown is, in principle, suitable for pulling haulm from one row of plants or from two rows of plants simultaneously. In the latter case, the left wheel and the left height adjustment primarily controls the height of the left haulm pulling assembly, and the right wheel and the right height adjustment primarily controls the height of the right haulm pulling assembly. It is also possible, however, to use more haulm pulling assemblies side by side, so that more ridges can be treated simultaneously. According as the number of side-by-side haulm pulling assemblies is larger and the field is rougher, it becomes more attractive to provide each haulm pulling assembly or each subgroup of haulm pulling assemblies with its own sensing device with associated height adjustment. The haulm pulling assemblies are then adjusted for height preferably with respect to a common supporting structure.

Figs. 1 and 4 also show haulm lifters 29, while Fig. 4 only shows the positions of the points 30 of the haulm lifters 29. In the proposed haulm lifters the height of the haulm pulling assembly and thus also the height of the points 30 of the haulm lifters 29 is accurately controlled, so that it is not necessary to cause the haulm lifters 29 to be active in the area beside the ridges as well, that is to say below the level of the upper sides of the ridges, so as to reliably lift the haulm. Instead thereof, a reliable lifting action can already be achieved when the lifters 29 move close along the upper sides 54 of the ridges 50. That the haulm lifters do not move along the flanks of the ridges 50 offers the advantage that the haulm lifter is much less sensitive to lateral movements relative to the ridges 50. Because in the upper region of the ridges the potatoes are often located very close under the surface of the flanks, the potatoes, when using conventional haulm pullers, are regularly exposed when the haulm lifters remove a part of the ridge owing to a lateral deviation from the mutual position of the ridge the haulm. The haulm lifters therefore preferably do not project more than about 6 cm below the engagement height of the haulm pulling assembly 4.

In practice, it regularly occurs that a ridge is locally interrupted, for instance because a sample of the potatoes has been taken, animals have dug into the ridge or the ridge is cut by a transverse furrow. In order that in such a case the height adjustment is prevented from reacting with the lowering of the position of the haulm pulling assembly, which lowering, after passing the interruption, cannot be rectified rapidly enough to prevent damage to the next ridge, a limited adjustment range of preferably at most about 10 cm is provided for the height adjustment. Furthermore, the control unit 45 is arranged so as not to react to detected descents of the level of the ridge which, over a given distance, for instance 0.5 m, exceed a given value, for instance 4 cm. Detected ascents, however, are followed so as to prevent the haulm pulling assembly 4 or the haulm lifters 29 as much as possible from running into obstacles lying on the field, which the driver of the tractor has not seen.

The invention may also be used successfully for other types of haulm pulling assemblies than the described haulm pulling assembly with pulling belts, such as for instance those with pulling wheels or pulling rolls.

Although the example started from haulm pulling for seed potatoes, the use of the invention is not limited thereto and the invention may also be used for correspondingly removing haulm from other types of potatoes, such as starch potatoes and edible potatoes, for which a very accurate control of the height at which the haulm puller engages the haulm in accordance with the height at which the haulm to be pulled projects from the ground is of special importance to obtain an effective removal of the haulm with little damage to the potatoes and the ridges or at least the bed.

## Claims

1. A haulm puller, comprising: at least one haulm pulling assembly (4) for engaging haulm to be pulled, during movement in a direction of treatment along a row of plants from which the haulm is to be pulled, and pulling loose the engaged haulm, leaving behind the tubers, and adjusting means (40) for adjusting the engagement height of the at least one haulm pulling assembly (4), a level sensor (6) located before or at the height of the at least one haulm pulling assembly (4) for sensing the ground, which level sensor (6) is actively connected with the adjusting means (40), the adjusting means being arranged to actively adapt, in operation, the engagement height of the at least one haulm pulling assembly (4) to the height of the ground in reaction to control signals from the level sensor (6), **characterized in that,** seen in the direction of treatment, the level sensor (6) is located for sensing in the area of a row of plants in which the ground is densely occupied with the plants, while running between the plants of said row, and **in that** the level sensor (6) has a sensing part (60) with such a length in the direction of treatment that, in operation, it can always simultaneously be supported on haulm of at least two successive plants.

2. A haulm puller according to claim 1, in which the level sensor (6) has an elongated, slim sensing part (60), the longitudinal axis of which extends substantially in the direction of treatment, and a leading end of which merges into an upwardly blending lead-in part (66).

3. A haulm puller according to claim 1 or 2, further comprising a tensioner (65) for pressing the level sensor (6) onto the ground to be sensed.

4. A haulm puller according to any one of the preceding claims, further comprising several haulm pulling assemblies (4) located side by side for simultaneously treating potato ridges located side by side, which haulm pulling assemblies (4) are each provided with an associated level sensor (6) and adjusting means actively connected therewith for adjusting the engagement height of the relevant haulm pulling assembly (4).

5. A method for pulling potato haulm, comprising: engaging haulm to be pulled at an engagement height, during movement in a direction of treatment along a row of plants from which the haulm is pulled, pulling loose the engaged haulm, leaving behind the tubers, sensing the ground, adjusting the engagement height before pulling the haulm, and, in operation, actively adapting the engagement height of the at least one haulm pulling assembly (4) to the height of the ground in reaction to control signals from the level sensor (6), **characterized in that** the sensing of the ground is in the area of a row of said plants that is densely occupied with said plants, before the haulm is pulled from said plants in said sensed area, the sensor running between the plants of said row and having a sensing part (60) with such a length in the direction of treatment that it is always simultaneously supported on haulm of at least two successive plants.

6. A method according to claim 5, wherein the plants from which haulm is pulled grow in ridges, the ground in said area being the upper side of a ridge.

7. A method according to any one of claims 76-8, further comprising: following movements of the level sensor (6) by the haulm pulling assembly (4) with an accuracy of -1 to +1 cm in reaction to movements of the level sensor (6) within at least one specific limitation, such as a lowness limitation and a steepness limitation, and not following movements of the level sensor in reaction to movements of the level sensor (6) outside the above at least one specific limitation.

## Patentansprüche

1. Krautrupfer, der umfasst: mindestens eine Krautrupfvorrichtung (4) zum Erfassen von zu rupfendem Kraut während der Bewegung in einer Bearbeitungsrichtung entlang einer Pflanzenreihe, aus der das Kraut zu rupfen ist, und zum Abrupfen des erfassten Krauts, wobei die Knollen zurückgelassen werden, und Einstellmittel (40) zum Einstellen der Erfassungshöhe der mindestens einen Krautrupfvorrichtung (4), einen Niveaufühler (6), der sich vor oder auf Höhe der mindestens einen Krautrupfvorrichtung (4) zum Abtasten des Bodens befindet, wobei der Niveaufühler (6) aktiv mit den Einstellmitteln (40) verbunden ist, wobei die Einstellmittel so angeordnet sind, dass sie im Betrieb die Erfassungshöhe der mindestens einen Krautrupfvorrichtung (4) in Reaktion auf die Steuersignale vom Niveaufühler (6) aktiv an die Bodenhöhe anpassen, **dadurch gekennzeichnet, dass** sich der Niveaufühler (6) in Bearbeitungsrichtung gesehen zum Abtasten im Bereich einer Pflanzenreihe befindet, in der der Boden dicht mit den Pflanzen besetzt ist, während er sich zwischen den Pflanzen der Reihe fortbewegt, und dadurch, dass der Niveaufühler (6) ein Fühlerelement (60) mit einer solchen Länge in der Bearbeitungsrichtung aufweist, dass es im Betrieb immer gleichzeitig auf dem Kraut von mindestens zwei aufeinander folgenden Pflanzen abgestützt werden kann.

2. Krautrupfer nach Anspruch 1, **dadurch gekennzeichnet, dass** der Niveaufühler (6) ein verlängertes, dünnes Fühlerelement (60) aufweist, dessen Längsachse sich im wesentlichen in der Bearbeitungsrichtung erstreckt, und dessen vorderes Ende in ein aufwärts anschließendes Einführelement (66) übergeht.

3. Krautrupfer nach Anspruch 1 oder 2, **dadurch gekennzeichnet, dass** er weiterhin einen Spanner (65) zum Drücken des Niveaufühlers (6) auf den abzutastenden Boden aufweist.

4. Krautrupfer nach einem der vorhergehenden Ansprüche, **dadurch gekennzeichnet, dass** er weiterhin mehrere Krautrupfvorrichtungen (4) aufweist, die zum gleichzeitigen Bearbeiten von nebeneinander angeordneten Kartoffelanhäuflungen nebeneinander angeordnet sind, wobei die Krautrupfvorrichtungen (4) jeweils mit einem zugehörigen Niveaufühler (6) und aktiv damit verbundenen Einstellmitteln zum Einstellen der Erfassungshöhe der betreffenden Krautrupfvorrichtung (4) versehen sind.

5. Verfahren zum Rupfen von Kartoffelkraut, das umfasst: Erfassen von zu rupfendem Kraut in einer Erfassungshöhe während der Bewegung in einer Bearbeitungsrichtung entlang einer Pflanzenreihe, aus der das Kraut gerupft wird, Losrupfen des erfassten Krauts, Zurücklassen der Knollen, Abtasten des Bodens, Einstellen der Erfassungshöhe vor dem Rupfen des Krauts und aktives Anpassen der Erfassungshöhe der mindestens einen Krautrupfvorrichtung (4) an die Bodenhöhe in Reaktion auf die Steuersignale vom Niveaufühler (6) im Betrieb, **dadurch gekennzeichnet, dass** das Abtasten des Bodens im Bereich einer Reihe der Pflanzen erfolgt, der dicht mit diesen Pflanzen besetzt ist, bevor das Kraut von den Pflanzen im abgetasteten Bereich gerupft wird, wobei sich der Fühler zwischen den Pflanzen der Reihe fortbewegt und ein Fühlerelement (6) mit einer solchen Länge in der Bearbeitungsrichtung aufweist, dass es immer gleichzeitig auf dem Kraut von mindestens zwei aufeinander folgenden Pflanzen abgestützt wird.

6. Ein Verfahren nach Anspruch 5, **dadurch gekennzeichnet, dass** die Pflanzen, von denen das Kraut gerupft wird, in Anhäuflungen wachsen, wobei der Boden in dem Bereich die Oberseite einer Anhäuflung ist.

7. Ein Verfahren nach einem der Ansprüche 1-6 **dadurch gekennzeichnet, dass** es weiterhin umfasst: Mitgehen mit den Bewegungen des Niveaufühlers (6) durch die Krautrupfvorrichtung (4) mit einer Genauigkeit von -1 bis +1 cm in Reaktion auf Bewegungen des Niveaufühlers (6) innerhalb mindestens einer spezifischen Beschränkung, wie zum Beispiel eine Tiefebeschränkung und eine Steilheitsbeschränkung, und Nichtmitgehen mit den Bewegungen des Niveaufühlers (6) außerhalb der vorgenannten mindestens einen spezifischen Beschränkung.

## Revendications

1. Appareil pour arracher des fanes, comprenant, au moins un ensemble d'arrachage de fanes (4) pour mettre en prise les fanes qui doivent être arrachées, pendant le déplacement dans une direction de traitement, le long d'une rangée de plants à partir desquels des fanes doivent être arrachées et arrachant lâchement les fanes mises en prise, laissant derrière les tubercules, et un moyen d'ajustement (40) pour ajuster la hauteur de mise en prise d'au moins un ensemble d'arrachage de fanes (4), un capteur de niveau (6) positionné avant ou à la hauteur d'au moins un ensemble d'arrachage de fanes (4) pour détecter le sol, lequel capteur de niveau (6) étant connecté de manière active au moyen d'ajustement (40), le moyen d'ajustement étant conçu pour s'adapter de manière active, en fonctionnement, à la hauteur de mise en prise d'au moins un ensemble d'arrachage de fanes (4) à la hauteur du sol en réaction à des signaux de commande provenant du capteur de niveau (6), **caractérisé en ce que**, vu dans la direction du traitement, le capteur de niveau 6 est placé pour détecter la zone d'une rangée de plants dans lequel le sol est occupé de manière très dense avec les plans, tout en se déplaçant entre les plants de ladite rangée, et **en ce que** les capteurs de niveau (6) comporte une partie de détection (60) avec une longueur telle que dans la direction du traitement, en fonctionnement, il peut toujours être simultanément supporté sur les fanes d'au moins deux plans successifs.

2. Appareil d'arrachage de fanes selon la revendication 1, dans lequel le capteur de niveau (6) comporte une partie de détection mince allongée (60), dont l'axe longitudinal s'étend sensiblement dans la direction du traitement et dont un bord tranchant se rejoint en une partie de mélange vers le haut (66).

3. Appareil d'arrachage de fanes selon la revendication 1 ou 2, comprenant, en outre, un dispositif de tension (65) pour presser le capteur de niveau (6) sur le sol qui doit être détecté.

4. Appareil d'arrachage de fanes selon l'une quelconque des revendications précédentes, comprenant, en outre, de nombreux ensembles d'arrachage de fanes (4) placés côte à côte pour traiter simultanément des sillons de pommes de terre placés côte à côte, lesquels ensembles d'arrachage de fanes (4) sont chacun pourvus d'un capteur de niveau associé (6) et d'un moyen d'ajustement connecté activement à ceux-ci pour ajuster la hauteur de mise en prise de l'ensemble d'arrachage de fanes pertinentes (4).

5. Procédé pour arracher des fanes de pommes de terre, comprenant les étapes consistant à : mettre en prise les fanes qui doivent être arrachées à une hauteur de mise en prise, pendant le déplacement dans une direction de traitement le long d'une rangée de plants à partir de laquelle les fanes sont arrachées, arracher lâchement les fanes mises en prises, laissant derrière les tubercules, détecter le sol, ajuster la hauteur de la mise en pris avant d'ajuster les fanes et, en fonctionnement, adapter activement la hauteur de mise en prise d'au moins un ensemble d'arrachage de fanes (4) à la hauteur du sol en réaction à des signaux de commande provenant du capteur de niveau (6), **caractérisé en ce que** la détection du sol est dans la zone d'une rangée desdits plants qui est occupée de manière très dense avec lesdits plants, avant que les fanes soient arrachées desdits plants dans ladite zone détectée, les capteurs se déplaçant entre les plants de ladite rangée et comportant une partie de détection (60) avec une longueur telle dans la direction du traitement qu'elle est toujours simultanément supportée sur les fanes d'au moins deux plans successifs.

6. Procédé selon la revendication (5), dans lesquels les plants à partir desquels les fanes sont arrachées poussent dans des sillons, le sol dans ladite zone étant le côté supérieur du sillon.

7. Procédé selon l'une quelconque des revendications 1 à 6, comprenant, en outre, les déplacements suivants du capteur de niveau (6) par l'ensemble d'arrachage de fanes (4) avec une précision de -1 à +1 cm en réaction du déplacement du capteur de niveau (6) à l'intérieur d'au moins une limitation spécifique, telle qu'une limitation inférieure à une limitation de profondeur et aucun déplacement suivant du capteur de niveau en réaction au déplacement du capteur de niveau (6) à l'extérieur d'au moins une limitation spécifique énoncée ci-dessus.
